Europäisches Patentamt

European Patent Office

Office européen des brevets

(11) Publication number: **0 023 822**
**A2**

(12) **EUROPEAN PATENT APPLICATION**

(21) Application number: **80302620.2**

(22) Date of filing: **31.07.80**

(51) Int. Cl.³: **A 23 P 1/00, A 23 B 4/06**

(30) Priority: **01.08.79 US 62687**

(43) Date of publication of application: **11.02.81**
**Bulletin 81/6**

(84) Designated Contracting States: **DE GB IT**

(71) Applicant: **CREPACO INC., 100 South CP Avenue, Lake
Mills Wisconsin 53551 (US)**

(72) Inventor: **Knapp, Milton E., 506 West Lake Street, Lake
Mills Wisconsin 53551 (US)**

(74) Representative: **Blatchford, William Charles et al,
WITHERS & ROGERS 4 Dyers Buildings Holborn,
London, EC1N 2JT (GB)**

(54) **A process for thawing frozen articles.**

(57) A process and apparatus are provided for use in the commercial thawing of a plurality of frozen articles. The process involves placing a plurality of articles in a plurality of receptacles, the latter being moistureproof and of thermal conductive material. Each receptacle-accommodated frozen article is positioned on one of a pair of complemental heated surfaces. The heated surfaces are moved relative to one another so as to effect a compressive force to be exerted for a predetermined time period on the positioned articles and cause thawing thereof. After lapse of the predetermined time period, the receptacles containing the articles in a thawed state are removed from between the heated surfaces.

TITLE MODIFIED
see front page

-1-

A PROCESS AND APPARATUS FOR
THAWING FROZEN ARTICLES

Background of the Invention

Commercial thawing of a large volume of frozen articles (e.g., food products such as meat, fish, etc.) has heretofore required large, costly equipment and an inordinate amount of time to effect the desired thawed condition of the articles.

In the processing of frozen meat for use in the production of sausage, luncheon meats, etc., one prior approach has been to reduce the frozen articles to chunks of relatively small size (e.g., approximately 2 1/2" diameter) and then to feed a plurality of such frozen chunks into a blender wherein the chunks are moved back and forth across a heated surface until the desired thawing has occurred. A blender for such a purpose is well known in the art; however, it is beset with numerous shortcomings, such as: a) the heated surface of the blender is costly and difficult to make and maintain; b) an inordinate amount of energy is required to not only supply the heating media to the surface, but also to operate the augers or the like which effect movement of articles across the surface; c) the prolong time required to effect the desired thawing; d) the inefficiency of operation; and e) the damage which occurs to the articles while being moved back and forth across the heated surface.

Another prior approach to reducing the thawing time for such articles has been the utilization of large size microwave ovens or the like. Not only are such ovens costly, but their capacity to handle a large volume of frozen articles is severely restricted. Furthermore, undesirable cooking of the interior of the articles frequently occurs.

Still another prior approach to effect the desired thawing has been to utilize heated, large-capacity cabinets through which heated air or the like is circulated. Not only is such a cabinet costly to construct but it demands a large amount of space. In order to prevent serious dehydration of the articles being thawed, the circulated air must be rigidly controlled at saturation or 100% relative humidity. Such humidity, however, causes severe environmental problems related to rusting, cleanability, and contamination. In addition to the foregoing, the use of such cabinets requires an inordinate amount of time to accomplish the desired thawing.

## Summary of the Invention

Thus, it is an object of the invention to provide a process and apparatus which avoids the aforenoted shortcomings.

It is a further object of the invention to provide a thawing apparatus which is of a simple construction and is capable of readily handling a wide variety of articles.

It is a further object of the invention to provide a process wherein all of the various juices produced by the articles during thawing are retained and thus preserve the quality and flavor of the thawed articles.

It is a still further object of the invention to provide a process and apparatus which is capable of handling a large volume of frozen articles and significantly accelerate the thawing time without deleteriously affecting the quality of the articles.

Further and additional objects will appear from the description and accompanying drawings.

In accordance with one embodiment of the invention a process is provided for thawing a plurality of frozen articles. The frozen articles are placed within a plurality of receptacles formed of moistureproof, thermal conductive material. Each receptacle accommodates at least one frozen article. The loaded receptacles are positioned between a pair of complemental heated surfaces. The heated surfaces are adjusted so that they coact to effect, for a predetermined time period, a compressive force being exerted on the receptacle-accommodated frozen articles causing same to thaw. After the lapse of the predetermined time period, the receptacles with the articles in a thawed condition are removed from between the heated surfaces.

## Description

For a more complete understanding of the invention reference should be made to the drawings wherein:

Fig. 1 is a fragmentary diaphragmatic plan view of one form of the improved apparatus for practicing the process.

Fig. 2 is a fragmentary perspective view of the infeed end of one component of the apparatus of Fig. 1 with a pair of complemental heated surfaces thereof spaced apart to receive a plurality of frozen articles.

Fig. 3 is a fragmentary side elevational view of the component of Fig. 2 showing the one pair of heated surfaces thereof in an article-receiving mode and additional pairs of heated surfaces in an article-thawing mode; the latter surfaces being arranged in superposed relation thereabove.

Fig. 4 is an enlarged, fragmentary, perspective view of a pair of heated surfaces disposed in an article-receiving mode and showing a plurality of articles accommodated within a plurality of receptacles positioned between the heated surfaces and supported by the lower surface.

Fig. 5 is an enlarged side elevational view of the pair of surfaces shown in Fig. 4 but in an article-thawing mode.

Fig. 6 is an enlarged, perspective, exploded view of one form of receptacle in combination with a frozen article.

Fig. 7 is an enlarged, fragmentary, sectional view taken along line 7-7 of Fig. 4.

Fig. 8 is a perspective view of a second form of a receptacle and showing a frozen article accommodated therein.

Fig. 9 is similar to Fig. 7 but showing the second form of receptacle loaded and disposed between a pair of heated surfaces, the latter being in an article-receiving mode.

Fig. 10 is similar to Fig. 9 but showing the receptacle under full compressive force of the heated surfaces when the latter are in an article-thawing mode.

Fig. 11 is similar to Fig. 9 but showing a third form of receptacle disposed between the heated surfaces when the latter are in an article-receiving mode.

Fig. 12 is similar to Fig. 11 but showing the heated surfaces in an article-thawing mode.

Fig. 13 is an enlarged fragmentary vertical sectional view of one form of a heated surface.

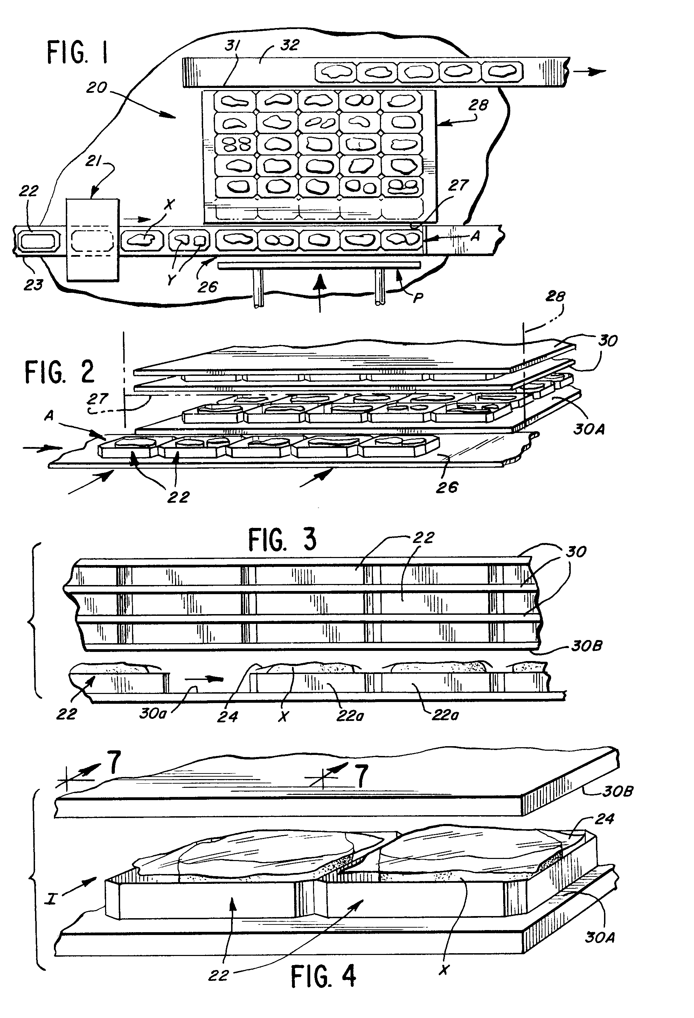

Referring now to the drawings and more particularly to Fig. 1; one form of the apparatus 20 is shown diaphragmatically for practicing the process to be hereinafter described.

The improved process and apparatus are particularly adapted for use in commercial processing plants wherein a large volume of frozen articles are required to be thawed quickly without adversely affecting the quality, flavor and appearance of the article or product in question.

One example of a commercial operation wherein the improved process and apparatus would be particularly valuable is where sausage, luncheon meat, cold cuts, etc. are being produced. In such an operation the meat ingredients are initially received in a frozen state. The size of the frozen meat ingredients may vary over a wide range, but preferably are slabs X not exceeding seventy-five pounds (75 lbs.). Such slabs X while in a frozen state are loaded at a first station 21 onto tray-like receptacles 22 which are disposed on a conveyor 23 and moved thereby past the station 21. Where, however, smaller slabs or chunks Y are available for loading at station 21, two or more slabs Y may be accommodated in a single tray-like receptacle 22.

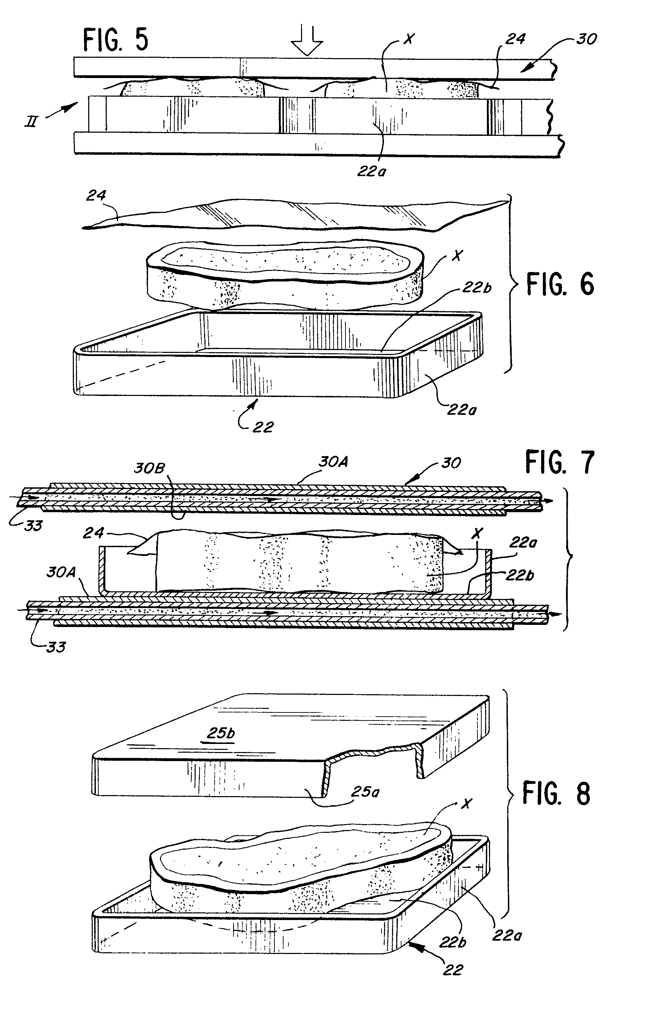

After the desired number of frozen products or articles have been deposited within a receptacle, either a thin pliable membrane 24 (see Fig. 6), or a telescoping cover 25 (see Fig. 8), is placed over the frozen article or articles disposed within the receptacle. In either case, where the frozen articles are a food item, it is necessary that such membrane, or cover, be utilized so as to prevent contamination of the articles during the remainder of the thawing process to be hereinafter described. The structural details regarding the tray-like receptacle 22, membrane 24, and cover 25 will be also described more fully hereinafter. Suffice to say at this point, however, that each of these components is formed of a moistureproof material having very high thermal conductivity.

The placement of the membrane, or cover, over the exposed exterior of the article(s) would normally occur at the loading station 21. After leaving station 21, the loaded receptacles are moved by conveyor 23 to an assembly station 26 wherein a predetermined number of receptacles are arranged in abutting side-by-side relation so as to form a single row A. The row is formed adjacent an inlet 27 formed in one side wall of an upright unit 28, the latter being shown in phantom lines in Fig. 2. The unit consists of a housing in which are disposed a plurality of heated plates 30 of like construction arranged in stacked superposed relation. The plates are vertically adjustable relative to one another between an article-receiving mode I (Fig. 4) and an article-thawing mode II (Fig. 5). When a pair of adjacent plates 30 are disposed at the unit inlet 27, they are in mode I with the lower of the pair of plates having the upper surface 30A thereof disposed substantially coplanar with the load-bearing surface of conveyor 23 at the assembly station 26.

Once the row A of receptacles has been formed at assembly station 26, the row is moved transversely off the conveyor through the inlet 27 onto the upper surface 30A of the lower plate of the pair of plates disposed in the article-receiving mode I at the inlet, by a pusher member P. If other rows of receptacles have previously been loaded onto surface 30A, each succeeding row will abut the preceding row on the surface causing all the remaining rows to move intermittently across the surface until the latter is filled with receptacles loaded with frozen articles X, Y.

Once the plate surface 30A has been filled, the loaded plate and the plate disposed thereabove are moved relative to one another into an article-thawing mode II wherein the under surface 30B of the upper plate and the upper surface 30A of the lower plate coact so as to cause a compressive force to be exerted on the receptacle-accommodated frozen articles located between the plates. Subsequent to the pair of plates assuming mode II, they are raised upwardly within the housing and the next lower plate is brought into alignment with the housing inlet 27, and the afore-described cycle is repeated.

In the illustrated embodiment of the apparatus and the process herein described, the frozen articles X, Y disposed within the tray-like receptacles 22 are all of substantially the same height and such height is greater than the height of the peripheral upright flange 22a which delimits the base 22b of each of the receptacles 22. It is the portion of each frozen article which projects above the flange and is in contact with the under surface 30B of the upper one of the pair of plates 30 that is separated from the under surface by the membrane 24, or a portion of the cover 25. Thus, by reason of the membrane or cover, the under surface 30B of the plate will not become soiled by the article as it thaws and vice versa the article will not become contaminated or deleteriously affected by the under surface.

As each pair of plates 30 in the article thawing mode II is moved upwardly from the housing inlet 27, the weight of the upper plate, as well as all the loaded plates stacked thereabove, will provide the compressive force exerted on the articles positioned between a pair of plates.

Each of the plates are heated to a temperature substantially above the thawing temperature of the frozen article but below the temperature at which the quality of the frozen article is adversely affected. Where the article is a meat product, the temperature of the heated plates or the article-contacting surfaces thereof should be below 120°F. Temperature of the contacting plate surfaces will depend upon the thawing characteristics of the frozen article. Furthermore, it is desirable that the thawing occur in the shortest time possible without sacrificing the quality of the product (e.g., 5000 lbs. of meat product thawed in 2 hours).

After all of the plates 30 have been filled with loaded receptacles and a predetermined time has elapsed, the pairs of plates are once again aligned with the housing inlet 27. The order in which the pairs of plates are filled is preferably the same order in which they are unloaded.

In unloading the upper surface 30A of a plate 30, the rows of receptacles of thawed articles supported thereby are intermittently moved through an outlet 31 disposed horizontally opposite inlet 27 and formed in a second upright side wall of the housing 28. The discharging of a row of receptacles of thawed articles through outlet 31 occurs as a row of receptacles of frozen articles is being moved by pusher P through the inlet 27 and onto plate surface 30A. Where, however, there is no row of receptacles of frozen articles to be positioned onto the plate surface 30A, the pusher P can be adjusted so as to intermittently move the rows of receptacles of thawed articles off of the plate surface 30A, through the outlet 31 and onto the load-bearing surface of a second conveyor 32 whereby the row of receptacles deposited onto the surface of the conveyor will be moved to a station, not shown, wherein the membrane 24 or cover 25 will be removed from the thawed articles and the latter, in turn, removed from the receptacle 22 for further processing.

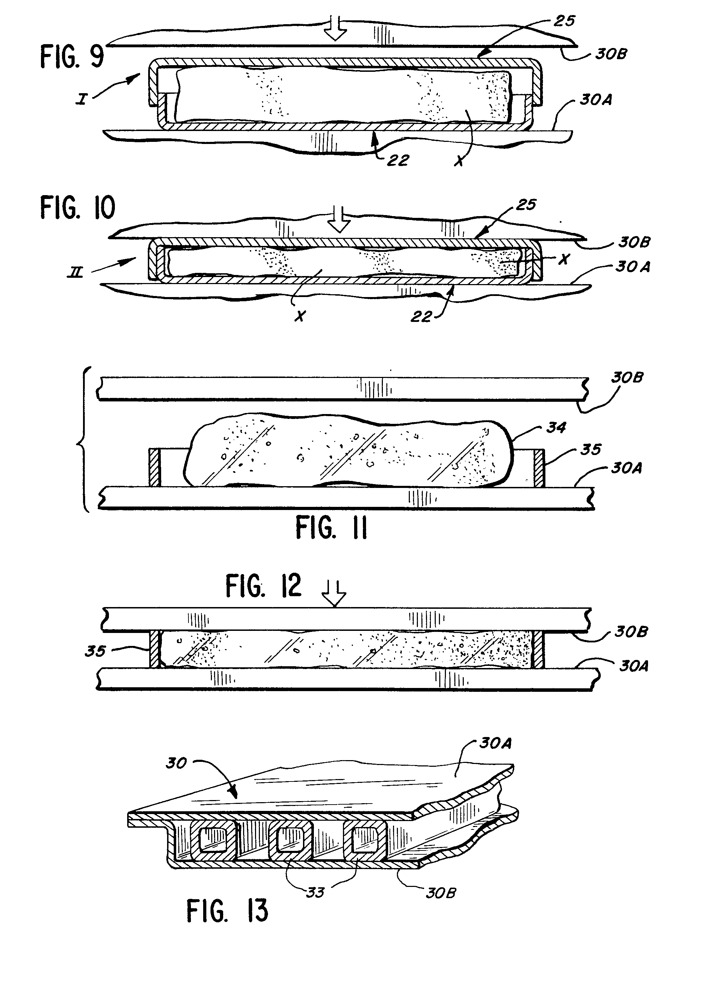

Each of the heated plates 30 may be of a hollow construction, as shown more clearly in Fig. 13. Disposed between the upper and lower surfaces 30A, 30B are a plurality of tubular members 33 which are arranged in spaced side-by-side relation. A heating media (e.g., water heated to 110°-115°F) is continuously circulated through the tubular members. The members 33 may be copper, aluminum, or some other suitable metallic tubing and the surfaces 30A, 30B are preferably of stainless steel, particularly where the articles to be thawed are food items. In lieu of the tubular members 33 and surfaces 30A and 30B being separate components, the plates 30 may be of one-piece construction extruded from aluminum or other suitable material.

The tray-like receptacles 22 are preferably of a metallic material (e.g., stainless steel) and the flange 22a must be sufficiently inflexible so that when one row of loaded receptacles is engaging a previously positioned row of receptacles, the flanges will not become distorted or deformed to such an extent that one receptacle will ride over another and thus, cause jamming of the receptacles between pairs of plates.

The cover 25 may be formed of the same material as receptacle 22 but the flange 25a, which delimits a central portion 25b and depends therefrom, may have a height the same as, or less than, the height of flange 22a of receptacle 22. The configuration of the central portion 25b is substantially the same as, but the area thereof is greater than, that of the base 22b of the receptacle 22. As the article thaws and due to the compressive force applied to the article by the pair of plates when in mode II, the cover 25 will move progressively downwardly and telescope over the receptacle 22 until the upper edge of flange 22a of the receptacle engages central portion 25b of the cover, see Fig. 10. Where the article is thick and protrudes a substantial distance above flange 22a, the article, when completely thawed, may prevent the flange 22a from engaging the central portion 25 of the cover 25.

In some instances, it may happen that not all of the frozen articles disposed within the receptacles project above the flange 22a and thus, in such a case, the short frozen articles will only be heated by the plate surface 30A on which the receptacle 22 is supported.

It has been determined where the frozen article is a meat product that the thawing rate is approximately one inch per hour (1"/hr.) measured perpendicular from the surface in contact with the article and with said contacting surface being heated to approximately 110°F to 115°F. If, however, both the top and bottom surfaces of the frozen article are in contact with a heated surface, then the thawing rate would be two inches per hour (2"/hr.) so long as the articles remain in continuous contact with the heated surfaces. It will be understood, of course, that when it is said that it is in contact with the heated surfaces, it is intended to include a situation wherein the article surface is separated from the adjacent heated plate surface by either the membrane 24 or the central portion 25b of the cover 25 and the base 22b of the receptacle 22. Because of the thermal conductivity of the membrane, cover central portion and the receptacle base, the heat of the plate surface is readily transmitted to the article surface in contact with the membrane, cover and/or receptacle. In any event, the actual rate of thawing would be related to the time and temperature exposure allowed while maintaining an acceptable product.

By reason of the flange 22a formed on receptacle 22, any juices which result during thawing operation are collected within the receptacle and may be utilized during further processing of the thawed article so as to enhance the taste, flavor, and overall quality thereof.

Where the frozen articles are a variety of odd shapes and sizes, it might be more convenient to place a plurality of frozen articles in one or more pliable moistureproof thermal conductive pouches or bags 34. Once the frozen articles are deposited within the bags, the latter are sealed close so as to entrap within the bags the moisture or juices from the articles during the thawing operation.

In order to facilitate movement of such loaded bags across the upper surface 30A of a plate 30, it might be desirable to place each bag within a ring-like member 35, see Figs. 11, 12, which is formed of a substantially inflexible material. The member encompasses one or more bags of frozen articles. The height of the member 35 is relatively short as compared to the initial height of the bag of frozen articles, see Fig. 11.

Where the compacting of the thawed article is to be controlled, a spacer bar, not shown, may be inserted between the pair of plates, if desired, rather than relying upon the flanges of either receptacle 22 or cover 25 or the member 35.

Under any circumstances, sufficient clearance should be provided within each bag so as to allow the articles to spread out when subjected to the compressive force caused by the plates in mode II, see Fig. 11.

Where in the commercial processing plant there is a cooling operation taking place in one area and a thawing operation in a second area, the heat absorbed or lost in one operation by the flowing media may be at least partially recovered thereby reducing the energy requirements in operating the plant. Because of the substantial surface contact maintained between the frozen articles and the heated surfaces, the thawing operation is efficient and expeditious. Furthermore, because there is no direct contact between the frozen article and the heated plate surfaces, contamination of or by the articles is no longer a significant problem.

While the process and apparatus have heretofore been described with regard to frozen meat products, it is to be understood, of course, that it is not intended to be limited thereto. The described process and apparatus are equally effective where the frozen article is fish, fowl, and liquid eggs.

Furthermore, manual feeding and removing of the articles between the complemental surfaces may be substituted for the automatic or semi-automatic equipment described and illustrated in Fig. 1.

0023822

CLAIMS

1. A process of thawing a given number of frozen articles within a predetermined time period, each frozen article having substantially known thawing characteristics, said process comprising loading a plurality of receptacles with the given number of frozen articles, each receptacle being formed of moistureproof, thermal conductive material and having at least one frozen article accommodated therein; positioning the loaded receptacles between a pair of heated surfaces, one surface subtending and supporting each receptacle, the second heated surface coacting with the one surface to effect at least initially during the predetermined time period a compressive force being exerted on the receptacle-accommodated frozen article having the greatest maximum height; and subsequent to the lapse of said predetermined time period, removing from between the heated surfaces all of the positioned receptacles with the accommodated articles thereof in a thawed state; the predetermined time period being determined by the frozen article having the longest thawing time for a given temperature, the latter being below a temperature wherein a predetermined state of deterioration first occurs in one of the accommodated articles positioned between the heated surfaces.

2. The process of claim 1 wherein each receptacle includes a tray unit having a base panel in thermal contact with and interposed between the one heated surface and the underside of each frozen article accommodated within the tray unit.

3. The process of claim 1 wherein substantially all of the receptacle-accommodated frozen articles are subjected to the compressive force effected by the coacting heated surfaces during the predetermined time period.

4. The process of claim 2 wherein each tray unit has the base panel thereof delimited by an upright flange which surrounds all of the frozen articles accommodated within the tray unit.

5. The process of claim 4 wherein the height of the upright flange of each tray unit is less than the maximum height of a substantial number of frozen articles positioned between the heated surfaces and/or the height of the upright flange of each tray unit is less than the spacing between the heated surfaces during the predetermined time period.

6. The process of claim 3 wherein each receptacle includes a cover unit which is in thermal contact with and interposed between the second heated surface and the exterior of any receptacle-accommodated article being subjected to said compressive force and wherein the cover unit preferably includes a thin pliable membrane of moistureproof thermal conductive material.

7. The process of claim 3 wherein all of the receptacle accommodated frozen articles have substantially the same maximum height and the articles, during the predetermined time period, are subjected to a substantially continuous compressive force effected by the coacting heated surfaces.

8. The process of claim 1 wherein each heated surface forms a part of a hollow unit and each surface is heated by causing a preheated fluid flowing continuously through each of said hollow units.

-14-

9.   The process of claim 7 wherein each of the receptacles for the frozen articles includes a tray unit having a base subtending and in thermal contact with a frozen article and an upright peripheral flange encompassing the frozen article, and a pliable thin membrane overlying and in thermal contact with the exterior of the frozen article projecting above the flange.

10.   The process of claim 6 wherein the cover unit during thawing of the article is in substantially telescoping relation with respect to a tray-like unit, the latter accommodating at least one frozen article.

FIG. 1

FIG. 2

FIG. 3

FIG. 4

FIG. 5

*X*

*24*

*30*

*II*

*22a*

*24*

*X*

*22b*

*22a*

*22*

FIG. 6

FIG. 7

*30B*

*30A*

*30*

*33*

*24*

*X*

*22a*

*22b*

*30A*

*33*

*25b*

*25a*

FIG. 8

*X*

*22b*

*22a*

*22*

FIG. 9

25

30B

30A

I

22

X

FIG. 10

25

30B

30A

II

X

22

X

30B

34

35

30A

FIG. 11

FIG. 12

35

30B

30A

30

30A

30B

33

FIG. 13